(19) Europäisches Patentamt
European Patent Office
Office européen des brevets

(11) **EP 3 645 978 B1**

(12) **FASCICULE DE BREVET EUROPEEN**

(45) Date de publication et mention
de la délivrance du brevet:
**19.01.2022 Bulletin 2022/03**

(21) Numéro de dépôt: **18725260.6**

(22) Date de dépôt: **25.05.2018**

(51) Classification Internationale des Brevets (IPC):
***G01D 5/22*** *(2006.01)*

(52) Classification Coopérative des Brevets (CPC):
**G01D 5/2291**

(86) Numéro de dépôt international:
**PCT/EP2018/063791**

(87) Numéro de publication internationale:
**WO 2019/001858 (03.01.2019 Gazette 2019/01)**

(54) **PROCEDE DE MESURE UTILISANT UN CAPTEUR DE DEPLACEMENT INDUCTIF**

MESSVERFAHREN UNTER VERWENDUNG EINES INDUKTIVEN VERSCHIEBUNGSSENSORS

MEASUREMENT METHOD USING AN INDUCTIVE DISPLACEMENT SENSOR

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **30.06.2017 FR 1756235
02.10.2017 FR 1759199**

(43) Date de publication de la demande:
**06.05.2020 Bulletin 2020/19**

(73) Titulaire: **Safran Electronics & Defense
75015 Paris (FR)**

(72) Inventeurs:
• **BOCAGE, Frédéric
77550 MOISSY-CRAMAYEL (FR)**
• **SAUVENT, Daniel
77550 MOISSY-CRAMAYEL (FR)**

(74) Mandataire: **Lavaud, Thomas et al
Cabinet Boettcher
16, rue Médéric
75017 Paris (FR)**

(56) Documents cités:
**FR-A1- 2 921 720     US-A1- 2016 197 620**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention concerne le domaine des procédés de mesure utilisant un capteur de déplacement inductif.

ARRIERE PLAN DE L'INVENTION

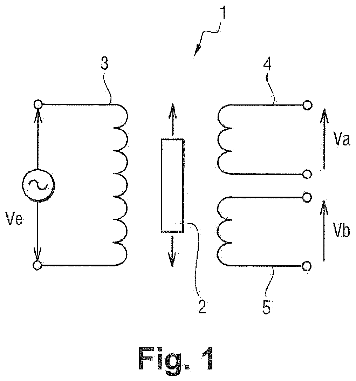

En référence à la figure 1, un capteur LVDT 1 (pour *Linear Variable Differential Transformer)* comporte classiquement un corps cylindrique dans lequel sont intégrés un transformateur et un noyau magnétique 2.

Le transformateur comprend un enroulement primaire 3, un premier enroulement secondaire 4 et un deuxième enroulement secondaire 5. Le noyau magnétique 2 coulisse axialement dans le corps cylindrique et modifie ainsi la distribution du champ magnétique qui règne dans ledit corps cylindrique.

Une tension d'excitation Ve est appliquée aux bornes de l'enroulement primaire 3. La tension d'excitation Ve présente une période et une fréquence d'excitation déterminées. On mesure une première tension de mesure Va aux bornes du premier enroulement secondaire 4 et une deuxième tension de mesure Vb aux bornes du deuxième enroulement secondaire 5.

La position du noyau magnétique 2 est obtenue à partir du rapport R :

$$R = (amp(Va) - amp(Vb)) / (amp(Va) + amp(Vb)),$$

où amp(Va) est l'amplitude de la première tension de mesure Va et où amp(Vb) est l'amplitude de la deuxième tension de mesure Vb.

Généralement, la première tension de mesure Va est acquise et numérisée pendant toute une période d'excitation et à une fréquence d'échantillonnage supérieure à celle de l'excitation, et amp(Va) est obtenue grâce à une démodulation synchrone de la première tension de mesure Va sur cette période d'excitation. Puis, au cours de la période d'excitation suivante, la deuxième tension de mesure Vb est acquise et numérisée, avec la même fréquence d'échantillonnage, et amp(Vb) est obtenue grâce à une démodulation synchrone de la deuxième tension de mesure Vb sur une période d'excitation.

Le calcul du rapport R est alors réalisé une fois qu'amp(Va) puis amp(Vb) ont été obtenues. Le temps de réponse de la mesure est donc supérieur à deux périodes d'excitation, ce qui est relativement important. Cette solution permet cependant de faire l'acquisition par une partie commune d'une seule chaine d'acquisition (hors composants de filtrage de perturbations électromagnétiques), et donc par un même convertisseur analogique numérique. On réduit ainsi l'erreur de gain sur la mesure.

On note que la vitesse non nulle du noyau magnétique 2 rend le rapport R non constant entre les deux périodes d'excitation, ce qui génère un effet de traîne sur la mesure de la position du noyau magnétique 2.

Alternativement, la première tension de mesure Va et la deuxième tension de mesure Vb sont acquises et numérisées simultanément par deux chaînes d'acquisition distinctes, durant la même période d'excitation et avec la même fréquence d'échantillonnage.

Le calcul du rapport R est alors réalisé une fois qu'amp(Va) et amp(Vb) ont été simultanément obtenues, et donc le temps de réponse de la mesure est cette fois proche d'une période d'excitation. Cependant, l'erreur de gain est accrue du fait de l'utilisation de deux chaines d'acquisitions distinctes pour VA et VB.

Alternativement, il est aussi possible d'utiliser une démodulation asynchrone. Une telle démodulation asynchrone est cependant plus sensible aux bruits environnementaux, quelle que soit leur fréquence.

Le document FR291720A1 décrit un exemple de procédé connu de mesure utilisant un capteur de déplacement inductif de type LVDT.

Le document US2016/197620A1 décrit un capteur de type LVDT connu.

OBJET DE L'INVENTION

L'invention a pour objet d'améliorer le temps de réponse et la précision d'un capteur de déplacement inductif et d'une chaîne d'acquisition reliée audit capteur de déplacement inductif, et de simplifier ladite chaîne d'acquisition.

RESUME DE L'INVENTION

En vue de la réalisation de ce but, on propose un procédé de mesure utilisant un capteur de déplacement inductif qui comporte un transformateur et un noyau magnétique, le transformateur comprenant un enroulement primaire et deux enroulements secondaires, le procédé de mesure comportant :

- une phase d'excitation comprenant l'étape d'appliquer une tension d'excitation alternative aux bornes de l'enroulement primaire ;
- une phase d'acquisition comprenant les étapes dont l'objectif est d'acquérir et de numériser deux tensions de mesure aux bornes des deux enroulements secondaires ;
- une première phase de traitement principal mise en œuvre sur les deux tensions de mesure et comprenant les étapes, pour chaque tension de mesure, de :

  - multiplier la tension de mesure par un sinus de référence et par un cosinus de référence pour obtenir deux signaux résultants ;
  - réaliser une première intégration de chaque signal résultant sur une fenêtre glissante de largeur égale à la période d'excitation pour obtenir deux signaux intégrés ;
  - réaliser une deuxième intégration de chaque signal intégré sur une fenêtre glissante de largeur égale à une demi-période d'excitation pour obtenir deux signaux doublement intégrés ;
  - produire, à partir des signaux doublement intégrés, une amplitude de la tension de mesure ;

- une première phase de traitement final comprenant l'étape de produire, à partir des amplitudes des deux tensions de mesure, une estimation d'une position du noyau magnétique.

Etant réalisée à chaque pas d'échantillonnage, sur la dernière période d'excitation, la première phase de traitement principal du procédé de mesure selon l'invention correspond donc à une « démodulation synchrone glissante ».

La mesure est donc robuste aux bruits environnementaux. De plus, une estimation de la position du noyau magnétique peut être produite après chaque acquisition d'une nouvelle valeur échantillonnée de chaque tension de mesure, ce qui réduit le temps de réponse et augmente le rafraîchissement de la mesure.

Enfin, il est possible de mettre en œuvre le procédé de mesure selon l'invention en utilisant un seul convertisseur analogique numérique qui acquiert de manière alternée les deux tensions de mesure (vitesse d'échantillonnage du convertisseur analogique numérique doublée, mais utilisation d'un seul convertisseur analogique numérique au lieu de deux). On simplifie ainsi la chaîne d'acquisition reliée au capteur de déplacement inductif, et on élimine l'erreur de gain présente avec deux convertisseurs analogiques numériques distincts.

On propose de plus un calculateur destiné à être relié à un capteur de déplacement inductif, le calculateur comprenant un composant de traitement et un convertisseur analogique numérique agencés pour mettre en œuvre le procédé de mesure qui vient d'être décrit.

On propose en outre un système comprenant un calculateur tel que celui qui vient d'être décrit et un capteur de déplacement inductif.

D'autres caractéristiques et avantages de l'invention ressortiront à la lecture de la description qui suit d'un mode de réalisation particulier non limitatif de l'invention.

BREVE DESCRIPTION DES DESSINS

Il sera fait référence aux dessins annexés, parmi lesquels :

- la figure 1 représente un capteur LVDT ;
- la figure 2 représente une partie de la première phase de traitement principal du procédé de mesure selon l'invention ;
- la figure 3 représente une autre partie de la première phase de traitement principal et une partie de la première phase de traitement final ;
- la figure 4 représente le procédé de mesure selon l'invention ;
- la figure 5 représente une phase préliminaire ;
- la figure 6 représente une deuxième phase de traitement principal et une deuxième phase de traitement final.

DESCRIPTION DETAILLEE DE L'INVENTION

L'invention est ici réalisée dans un système comprenant un capteur LVDT et un calculateur relié au capteur LVDT.

Le capteur LVDT est semblable au capteur LVDT 1 qui vient d'être décrit.

Le calculateur comporte un composant de traitement et une chaîne d'acquisition comprenant un convertisseur analogique numérique. Le composant de traitement et le convertisseur analogique numérique sont agencés pour mettre en œuvre le procédé de mesure selon l'invention.

Le composant de traitement est ici un FPGA, mais pourrait parfaitement être un composant différent, par exemple un processeur, un microcontrôleur ou un ASIC.

Le procédé de mesure permet tout d'abord d'estimer une position du noyau magnétique 2 du capteur LVDT 1.

Pour cela, le procédé de mesure comporte tout d'abord une phase d'excitation.

Au cours de la phase d'excitation, le calculateur produit une tension d'excitation Ve qui est appliquée aux bornes de l'enroulement primaire 3 du transformateur du capteur LVDT 1. La tension d'excitation Ve est ici appliquée de manière continue, pendant toute une durée de mesure au cours de laquelle des mesures doivent être réalisées. La tension d'excitation présente une période d'excitation Texc et une fréquence d'excitation Fexc déterminées (avec Texc=1/Fexc).

Le procédé de mesure comporte de plus une phase d'acquisition. Au cours de la phase d'acquisition, la première tension de mesure Va et la deuxième tension de mesure Vb sont acquises par le calculateur, puis numérisées par le convertisseur analogique numérique avec une certaine fréquence d'échantillonnage, largement supérieure à la fréquence d'excitation.

La première tension de mesure Va et la deuxième tension de mesure Vb sont numérisées de manière alternée, à chaque pas d'échantillonnage, par le convertisseur analogique numérique.

Le composant de traitement acquiert les valeurs échantillonnées de la première tension de mesure Va et de la deuxième tension de mesure Vb.

On notera Van et Vbn les valeurs échantillonnées de la première tension de mesure Va et de la deuxième tension de mesure Vb à l'instant n. Comme l'acquisition est alternée, l'instant n est décalé dans le temps pour la première tension de mesure Va et pour la deuxième tension de mesure Vb. On notera également dans la suite NPT le nombre de points d'échantillonnage de Va (et de Vb) par période d'excitation Texc. Ici, NPT=32, mais le nombre NPT pourrait être différent, par exemple égal à 64.

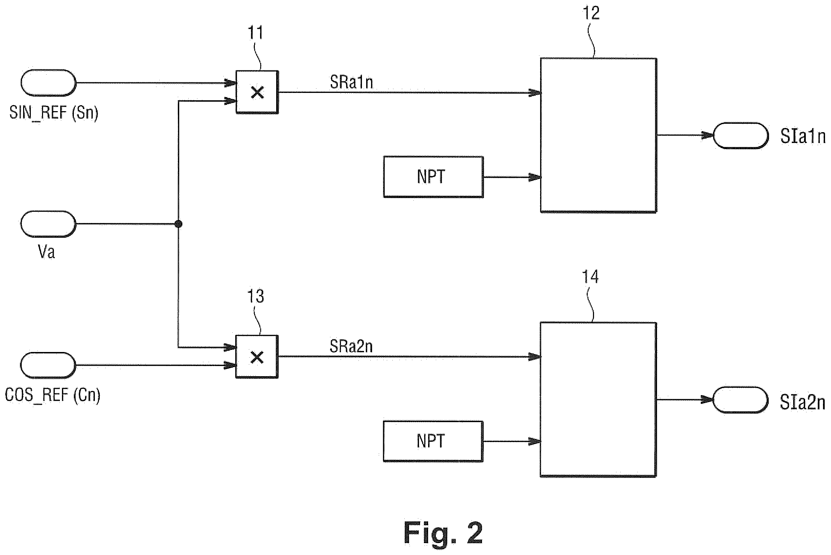

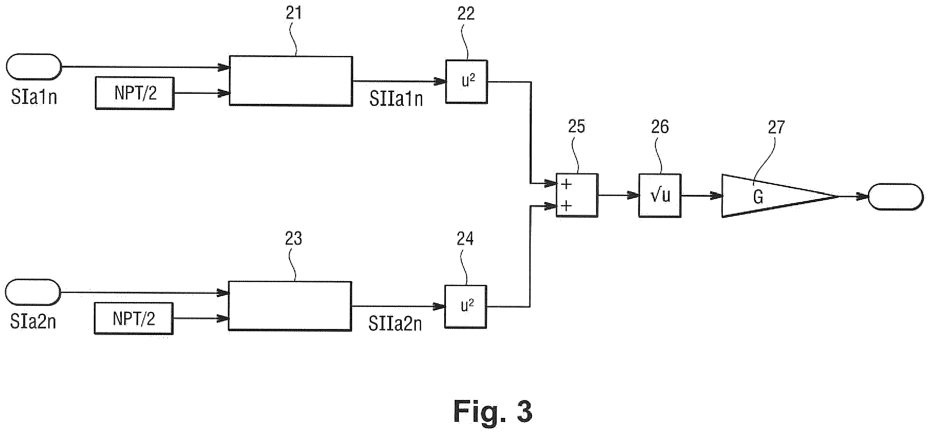

En référence aux figures 2 et 3, le procédé de mesure comporte de plus une première phase de traitement principal mise en œuvre sur la première tension de mesure Va et sur la deuxième tension de mesure Vb. Les figures 2 et 3 illustrent uniquement la mise en œuvre de la première phase de traitement principal sur la première tension de mesure Va, mais ce qui suit s'applique aussi à la deuxième tension de mesure Vb.

La première phase de traitement principal est réalisée par le composant de traitement du calculateur. Un certain nombre de blocs fonctionnels sont programmés dans le composant de traitement. Parmi ces blocs fonctionnels, on trouve un premier multiplieur 11, un premier bloc intégrateur 12, un deuxième multiplieur 13 et un deuxième bloc intégrateur 14. Ces blocs fonctionnels sont visibles sur la figure 2.

Un sinus de référence SIN_REF et un cosinus de référence COS_REF, de fréquence égale à la fréquence d'excitation Fexc, sont générés en interne du composant de traitement. Le sinus de référence SIN REF et le cosinus de référence COS_REF sont discrétisés avec un période égale à la période d'échantillonnage. Les éléments ainsi obtenus sont appelés dans la suite Sn (pour le sinus de référence SIN_REF) et Cn (pour le cosinus de référence COS_REF).

Les étapes qui suivent sont tout d'abord appliquées sur la première tension de mesure Va, suite à chacune de ses numérisations VAn par le convertisseur analogique numérique.

La valeur échantillonnée Van de la première tension de mesure Va acquise à l'instant n est multipliée par le premier multiplieur 11 au sinus de référence SIN_REF discrétisé à l'instant n, soit Sn, pour obtenir un premier signal résultant que l'on notera SRa1n dans la suite.

Puis, pour chaque nouvelle valeur échantillonnée Van de la première tension de mesure Va, le premier bloc intégrateur 12 intègre le premier signal résultant SRa1n obtenu pour les NPT dernières valeurs échantillonnées Van, couvrant ainsi une période d'excitation Texc. On réalise ainsi une première intégration du premier signal résultant SRa1n sur une fenêtre glissante de durée égale à la période d'excitation Texc, cette fenêtre glissante se terminant lors de la dernière acquisition d'une valeur échantillonnée Van.

On obtient alors, en sortie du premier bloc intégrateur 12, un premier signal intégré SIa1n pour chaque nouvelle valeur échantillonnée Van de la première tension de mesure Va.

De même, la valeur échantillonnée Van de la première tension de mesure Va acquise à l'instant n est multipliée par le deuxième multiplieur 13 au cosinus de référence COS_REF discrétisé à l'instant n, soit Cn, pour obtenir un deuxième signal résultant que l'on notera SRa2n dans la suite.

Puis, pour chaque nouvelle valeur échantillonnée Van de la première tension de mesure Va, le deuxième bloc intégrateur 14 intègre le deuxième signal résultant SRa2n obtenu pour les NPT dernières valeurs échantillonnées Van, couvrant ainsi une période d'excitation Texc. On réalise ainsi une première intégration du deuxième signal résultant SRa2n sur une fenêtre glissante de durée égale à la période d'excitation Texc, cette fenêtre glissante se terminant lors de la dernière acquisition d'une valeur échantillonnée Van.

On obtient alors, en sortie du deuxième bloc intégrateur 14, un deuxième signal intégré SIa2n pour chaque nouvelle valeur échantillonnée Van de la première tension de mesure Va.

Le premier bloc intégrateur 12 et le deuxième bloc intégrateur 14 sont ici semblables. Un exemple d'algorithme du premier bloc intégrateur 12 et du deuxième bloc intégrateur 14 est fourni en Annexe 1 de cette description. L'intégration peut être d'ordre 0 (comme proposé en Annexe 1), d'ordre 1 (intégration trapézoïdale), d'ordre 2, voire même d'ordre supérieur.

Parmi les blocs fonctionnels programmés dans le composant de traitement, on trouve aussi un troisième bloc intégrateur 21, un premier bloc d'élévation 22, un quatrième bloc intégrateur 23, un deuxième bloc d'élévation 24, un sommateur 25, un bloc de calcul 26 et un bloc de gain 27. Ces blocs fonctionnels sont visibles sur la figure 3.

Les étapes qui suivent sont appliquées, pour chaque nouvelle valeur échantillonnée Van de la première tension de mesure Va, sur le premier signal intégré SIa1n et sur le deuxième signal intégré SIa2n de la première tension de mesure Va.

La deuxième intégration du premier signal intégré SIa1n utilise le troisième bloc intégrateur 21. La deuxième intégration est cette fois réalisée, pour chaque nouvelle valeur échantillonnée Van de la première tension de mesure Va, sur une fenêtre glissante des NPT/2 derniers points, ce qui correspond à une largeur égale à une demi-période d'excitation.

De même, la deuxième intégration du deuxième signal intégré SIa2n utilise le quatrième bloc intégrateur 23. La deuxième intégration est réalisée, pour chaque nouvelle valeur échantillonnée Van de la première tension de mesure Va, sur une fenêtre glissante des NPT/2 derniers points, ce qui correspond à une largeur égale à une demi-période d'excitation.

La deuxième intégration permet d'éliminer un signal résiduel après la première intégration, ce signal résiduel étant de fréquence égale à deux fois la fréquence d'excitation Fexc. Ce signal résiduel est présent dès lors que la vitesse de variation de la position du capteur (donc la vitesse de variation du ratio) n'est pas négligeable durant une période d'excitation (le ratio ne peut pas être considéré constant sur une période d'excitation au regard de la précision de mesure attendue). Cette hypothèse est supposée valide dans les algorithmes de démodulation classique basé sur une intégration simple.

On obtient ainsi un premier signal doublement intégré SIIa1n et un deuxième signal doublement intégré SIIa2n. Le premier signal doublement intégré SIIa1n et le deuxième signal doublement intégré SIIa2n sont ensuite chacun élevés au carré, respectivement par le premier bloc d'élévation 22 et par le deuxième bloc d'élévation 24. Le traitement réalisé par les blocs 22, 24, 25 et 26 permet d'éliminer tout dépendance de la mesure au déphasage entre l'excitation et les cosinus / sinus de référence (classique dans un algorithme synchrone).

La première phase de traitement principal comprend ensuite l'étape de produire, à partir du premier signal doublement intégré SIIa1n et du deuxième signal doublement intégré SIIa2n, l'amplitude amp(Va) de la première tension de mesure Va.

Pour cela, le premier signal doublement intégré SIIa1n et le deuxième signal doublement intégré SIIa2n sont sommés par le sommateur 25. Le bloc de calcul 26 calcule ensuite une racine carrée du signal de sortie du sommateur 25.

Puis, le gain G du bloc de gain 27 est appliqué en sortie du bloc de calcul 26.

Le gain G du bloc de gain 27 est tel que :

```
G=1/(2^(ADC_Nbits-1)/10*(Nstep_demod)/2)/(Nstep_demod/2),
```

où :

- 1/(2^(ADC_Nbits-1)/10 permet de corriger le gain nominal de la conversion analogique numérique réalisée par le convertisseur analogique numérique (pour un convertisseur analogique numérique sur Nbits ayant sa plein échelle sur 10V) ;
- Nstep_demod permet de corriger le gain de la première intégration sur une période d'excitation (correspondant à NPT pas d'échantillonnage) ;
- Nstep_demod /2 permet de corriger le gain de la deuxième intégration sur une demi-période d'excitation (correspondant à NPT/2 pas d'échantillonnage) ;
- 1/2 est une constante. Cette constante provient de la formule trigonométrique sous-jacente de l'algorithme de démodulation synchrone sina.sinb=1/2 (sin(a+b)/2 + sin(a-b)/2 et équivalente).

Le gain G est ainsi défini pour corriger un gain du convertisseur analogique numérique, un gain du premier bloc intégrateur 12, un gain du deuxième bloc intégrateur 14 (qui réalisent la première intégration), un gain du troisième bloc intégrateur 21, et un gain du troisième bloc intégrateur 23 (qui réalisent la deuxième intégration).

On obtient en sortie du bloc de gain 27 l'amplitude amp(Va) de la première tension de mesure Va.

L'amplitude amp(Va) de la première tension de mesure Va est égale à $G \cdot \sqrt{(SIIa1n^2 + SIIa2n^2)}$.

L'ensemble des étapes qui viennent d'être décrites sont aussi réalisées de la même manière sur la deuxième tension de mesure Vb. On obtient donc un premier signal résultant SRb1n et un deuxième signal résultant SRb2n, un premier signal intégré SIb1n et un deuxième signal intégré SIb2n, un premier signal doublement intégré SIIb1n et un deuxième signal doublement intégré SIIb2n.

On obtient alors l'amplitude amp(Vb) de la deuxième tension de mesure Vb.

L'amplitude amp(Vb) de la deuxième tension de mesure Vb est égale à $G \cdot \sqrt{(SIIb1n^2 + SIIb2n^2)}$.

Le procédé de mesure comporte alors une première phase de traitement final qui comprend l'étape de produire, à partir des amplitudes des deux tensions de mesure, une estimation d'une position du noyau magnétique 2.

L'estimation de la position du noyau magnétique 2 est obtenue à partir du rapport R :

$$R=(amp(Va)-amp(Vb))/(amp(Va)+amp(Vb)).$$

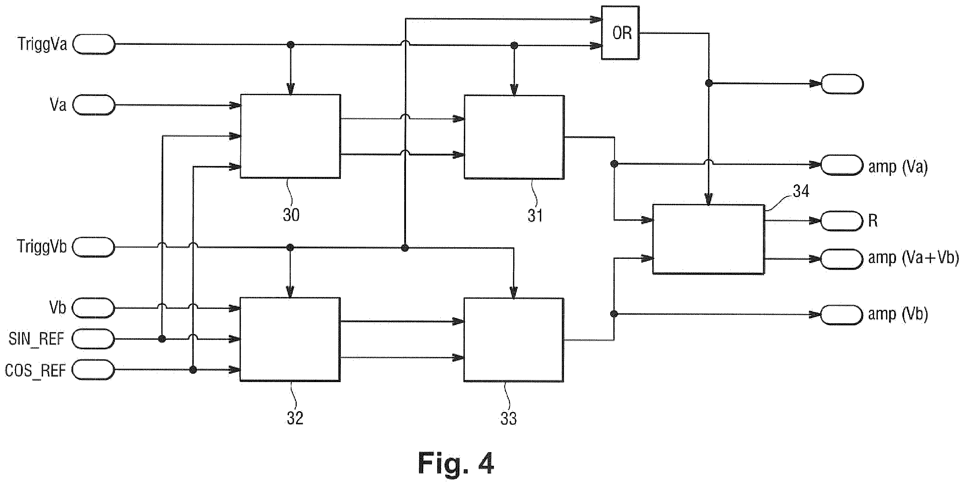

Les premières phases de traitement principal et la première phase de traitement final qui viennent d'être décrites sont représentées à un niveau supérieur (niveau système) sur la figure 4.

Les blocs 30 et 31 représentent la première phase de traitement principal mise en œuvre sur la première tension de mesure Va.

Le bloc 30 acquiert ainsi la première tension de mesure Va ainsi que le sinus de référence SIN_REF et le cosinus de référence COS_REF, et produit le premier signal doublement intégré SIIa1n et le deuxième signal doublement intégré SIIa2n.

Le bloc 31 acquiert le premier signal doublement intégré SIIa1n et le deuxième signal doublement intégré SIIa2n, et produit l'amplitude amp(Va) de la première tension de mesure Va.

La première phase de traitement est déclenchée par le signal TriggVa à chaque nouvelle acquisition d'une valeur échantillonnée Van de la première tension de mesure Va.

De même, les blocs 32 et 33 représentent la première phase de traitement principal mise en œuvre sur la deuxième tension de mesure Vb.

Le bloc 32 acquiert ainsi la deuxième tension de mesure Vb ainsi que le sinus de référence SIN_REF et le cosinus de référence COS_REF, et produit le premier signal doublement intégré SIIb1n et le deuxième signal doublement intégré SIIb2n.

Le bloc 33 acquiert le premier signal doublement intégré SIIb1n et le deuxième signal doublement intégré SIIb2n, et produit l'amplitude amp(Vb) de la deuxième tension de mesure Vb.

La première phase de traitement est déclenchée par le signal TriggVb, à chaque nouvelle acquisition d'une valeur échantillonnée Vbn de la première tension de mesure Vb.

Enfin, le bloc 34 représente la première phase de traitement final. Le bloc 34 acquiert l'amplitude amp(Va) de la première tension de mesure Va et l'amplitude amp(Vb) de la deuxième tension de mesure Vb. Le bloc 34 produit le rapport R et donc une estimation de la position du noyau magnétique 2. Le bloc 34 produit aussi l'amplitude amp(Va+Vb) de la somme de la première tension de mesure Va et de la deuxième tension de mesure Vb.

Au besoin, le rapport R peut être calculé à chaque période d'échantillonnage de la première tension de mesure Va et/ou de la première tension de mesure Vb (surtout si les échantillonnages sont alternés).

Le procédé de mesure permet aussi d'estimer une vitesse de variation de la position du noyau magnétique 2 du capteur LVDT 1.

Pour cela, le procédé de mesure réalise une démodulation synchrone glissante sur un signal de vitesse VR(t) représentatif de la vitesse de variation du rapport R. La démodulation synchrone glissante est réalisée au cours d'une deuxième phase de traitement principal semblable à la première phase de traitement principal, réalisée en parallèle de la première phase.

On a :

$$VR(t)=dR/dt=d(Va(t)-Vb(t))/((Va(t)+Vb(t)).dt),$$

avec Va(t)+Vb(t)=V0.

V0 est ici supposée constante pendant une période d'excitation Texc, ce qui correspond à une hypothèse classique pour un capteur LVDT, indépendamment de la position ou de la vitesse de variation de la position.

Ainsi, dVa(t)=-dVb(t).

On peut alors aussi écrire :

$$dVa(t)/dt=VR(t).V0/2 = VR(t).(amp(Va)+amp(Vb)/2.$$

En supposant la vitesse VR(t) constante sur une période d'excitation Texc, on a :

$$VR(t)=dR.Fexc=(dVa-dVb).Fexc/V0,$$

où dVa est la variation d'amplitude de la première tension de mesure Va sur une période d'excitation Texc et où dVb est la variation d'amplitude de la deuxième tension de mesure Vb sur une période d'excitation Texc.

La vitesse VR peut être positive ou négative, contrairement au rapport R qui est forcément positif et compris entre 0 et 1.

Comme la démodulation synchrone produite par la première phase de traitement principal décrite plus tôt fournit l'amplitude du signal d'entrée, et donc une valeur absolue, on ne peut pas injecter directement les signaux dans les algorithmes correspondant à la première phase de traitement principal. Si tel était le cas, l'algorithme produirait la valeur absolue de la vitesse. Or, celle-ci peut être négative.

Le procédé de mesure comporte donc une phase préliminaire comprenant l'étape de produire deux tensions « croisées » dépendant chacune des deux tensions de mesure.

Pour la première tension de mesure Va, on produit une première tension croisée VCa telle que :

$$VCa(n)=(Va(n)+Vb(n)).Vmax+(Va(n)-Va(n-1/Fexc))*Fexc.$$

Pour la deuxième tension de mesure Vb, on produit une deuxième tension croisée VCb telle que :

$$VCb(n)=(Va(n)+Vb(n)).Vmax+(Vb(n)-Vb(n-1/Fexc))*Fexc.$$

Dans ces formules, VCa(n), VCb(n), Va(n) et Vb(n) sont respectivement les $n^{\text{ièmes}}$ échantillons de la première tension croisée, de la deuxième tension croisée, de la première tension de mesure Va et de la deuxième tension de mesure Vb, Vmax est une valeur absolue maximale attendue de la vitesse de variation de la position du noyau magnétique, et Fexc est la fréquence d'excitation de la tension d'excitation ; (n-1/Fexc) représente l'indice de l'échantillon acquis une période d'excitation avant l'échantillon n, la durée entre les deux échantillons n et (n-1/Fexc) étant le pas de la dérivée dt=1/Fexc.

La démodulation synchrone glissante est alors mise en œuvre, dans cette deuxième phase de traitement principal (semblable à la première phase de traitement principal) sur la première tension croisée VCa(n) et sur la deuxième tension croisée VCb(n). Ce traitement est mené en parallèle de la première phase de traitement principal (mesure de la position).

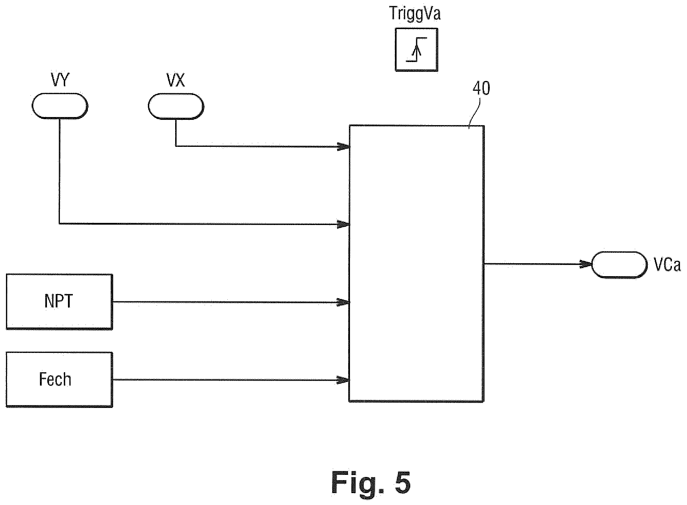

La figure 5 illustre la phase préliminaire pour la tension de mesure VCa. Le bloc 40 acquiert la tension VX, avec VX=Va, et la tension VY, avec VY=Vb, la fréquence d'échantillonnage Fech et la valeur NPT.

Le bloc 40 produit alors la première tension croisée VCa(n).

Pour produire la deuxième tension croisée VCb(n), un bloc similaire 41 au bloc 40 est utilisé, avec VX=Vb et VY=Va.

Un exemple d'algorithme de la phase préliminaire est fourni en Annexe 2 de cette description.

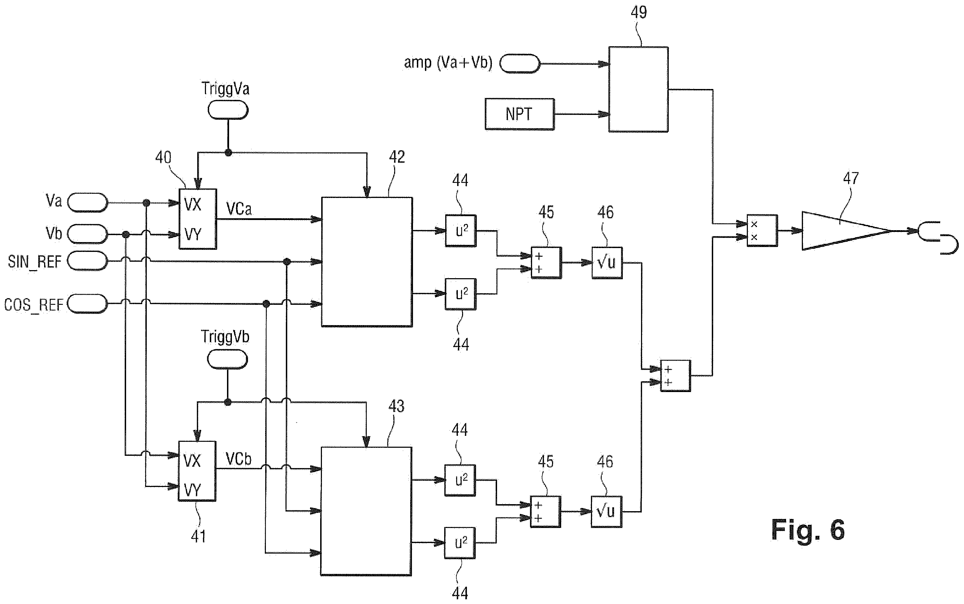

La figure 6 illustre la mesure de vitesse dans son ensemble. Le bloc 40 et le bloc 41 réalisent la phase préliminaire et produisent respectivement la première tension croisée VCa(n) et la deuxième tension croisée VCb(n).

Puis, la deuxième phase de traitement principal, semblable à la première phase de traitement principal, est mise en œuvre sur la première tension croisée VCa(n) et sur la deuxième tension croisée VCb(n).

Le bloc 42 représente la mise en œuvre de la première intégration et de la deuxième intégration sur la première tension croisée VCa(n), alors que le bloc 43 représente la mise en œuvre de la première intégration et de la deuxième intégration sur la deuxième tension croisée VCb(n). Les blocs 44, 45 et 46 correspondent respectivement aux blocs élévateurs, au sommateur et au bloc de calcul précédemment décrits.

On note que la deuxième intégration n'est pas nécessairement réalisée.

La démodulation synchrone glissante de VCa(n), mise en œuvre au cours de la deuxième phase de traitement principal, donne une valeur d'amplitude égale à :

$$Vouta=(V0.Vmax + dVa.Fexc).$$

La démodulation synchrone de VCb(n), mise en œuvre au cours de la deuxième phase de traitement principal, donne une valeur d'amplitude égale à :

$$Voutb=(V0.Vmax + dVb.Fexc).$$

Un rapport R', similaire au rapport R, est ainsi calculé :

$$R'=(Vouta-Voutb)/(amp(Va)+amp(Vb))$$

Soit R'=(Vouta-Voutb)/(amp(Va+Vb)),
Soit R'=2.dVa.Fexc/V0
Donc R'= dR/dt vitesse de variation de la position

$$Car\ dVa(t)/dt=VR(t).V0/2 = -dVb/dt\ et\ dt=1/Fexc$$

où :
Vouta et Voutb sont les sorties deuxième phase de traitement principal appliqué aux signaux générés pour la mesure de vitesse, et où amp(Va) et amp(Vb) sont respectivement l'amplitude de la première tension de mesure et l'amplitude de la deuxième tension de mesure fournies par la première phase de traitement principal (ou amp(VA+Vb) amplitude de la somme Va+Vb).

Le signal amp(Va+Vb), issu de l'algorithme de démodulation de position, est utilisé via un cinquième bloc intégrateur 49. En option selon les gains en précision, un filtrage simple peut être rajouté.

Le bloc de gain 47 applique un gain final G :

$$G=single(1/(2^{\wedge}(ADC\_Nbits-1)/10*single(Nstep\_demod)/2)).$$

Le gain final compense le gain du convertisseur analogique numérique et le gain de l'intégration (seule la première intégration est prise en compte dans cette formule), ainsi que le gain trigonométrique égal à 1/2.

Bien entendu, l'invention n'est pas limitée au mode de réalisation décrit mais englobe toute variante entrant dans le champ de l'invention telle que définie par les revendications.

Bien que l'on ait indiqué ici que le capteur de déplacement inductif est un LDVT, l'invention s'applique aussi à un capteur de déplacement inductif différent, par exemple à un RVDT. L'invention s'applique de manière plus générale à tout capteur dont l'acquisition est basée sur une démodulation synchrone.

Le calculateur décrit ici comporte un unique convertisseur analogique numérique. Il est cependant possible d'utiliser deux convertisseurs analogiques numériques montés en parallèle, et d'acquérir la première tension de mesure et la deuxième tension de mesure de manière simultanée. La fréquence d'échantillonnage peut alors être divisée par 2. Le choix entre l'acquisition simultanée et l'acquisition alternée dépend des ressources matérielles (hardware) et de leur optimisation (nombre de convertisseurs analogiques numériques et fréquence d'échantillonnage maximale accessible).

ANNEXE 1

```
function y = fcn_ordre0(A,Nstep_demod)

persistent mat % mémorisation FPGA des données
acquises (mémoire parcourue cycliquement)
persistent cnt % position de la dernière donnée
acquise dans la mémoire mat

if isempty(mat) % initialisation
   mat=single(zeros(500));
   cnt=uint8(1); % Counter to count number of times
enabled
end

if (cnt==Nstep_demod+1) % retour au début de la
mémoire quand la fin de zone est atteinte
cnt=uint8(1);
end


if cnt <= Nstep_demod
   mat(cnt)=A; % stockage de la dernière donnée acquise
   cnt=cnt+1;  % incrémentation du compteur de position
            % mémoire
end

add=single(0); % intégration sur une période de
            % démodulation
for i=1:Nstep_demod
    add=add+mat(i);
end

y=add;
```

ANNEXE 2

```
function y = memoire_periode(X,Y,Nstep_demod,Fsample)

persistent matX % mémorisation FPGA des données
acquises (mémoire parcourue cycliquement)
persistent matY % mémorisation FPGA des données
acquises (mémoire parcourue cycliquement)
persistent cnt %position de la dernière donnée acquise
dans la mémoire mat

if isempty(matX) % initialisation
  matX=single(zeros(500));
  matY=single(zeros(500));
  cnt=uint8(1); % Counter to count number of times
enabled
end

if (cnt==Nstep_demod+1) % retour au début de la
mémoire
                          %quand la fin de zone est
                 atteinte
cnt=uint8(1);
end

oldX=matX(cnt); % stockage de la valeur de VX datant
d'une
% période de démodulation
oldY=matY(cnt); % stockage de la valeur de VY datant
d'une
% période de démodulation
matX(cnt)=X;        %stockage de la dernière valeur de
VX
matY(cnt)=Y;        %stockage de la dernière valeur de
VY

add=single(0);
add=(matX(cnt)+matY(cnt))*100/Fsample*single(Nstep_dem
od)/2; % avec 100/s = % Vmax=100/s pour l'exemple
% Fsample*Nstep_demod = 1/Tref
add=add+(matX(cnt)-oldX);
%Fsample/single(Nstep_demod)/2 = Fref = freq su sinus
de ref

                    cnt=cnt+1;

                    y=add;
```

**Revendications**

1. Procédé de mesure utilisant un capteur de déplacement inductif (1) qui comporte un transformateur et un noyau magnétique (2), le transformateur comprenant un enroulement primaire (3) et deux enroulements secondaires (4, 5), le procédé de mesure comportant :

   - une phase d'excitation comprenant l'étape d'appliquer une tension d'excitation (Ve) alternative aux bornes de l'enroulement primaire ;
   - une phase d'acquisition comprenant les étapes dont l'objectif est d'acquérir et de numériser deux tensions de mesure (Va, Vb) aux bornes des deux enroulements secondaires ;
   - une première phase de traitement principal mise en œuvre sur les deux tensions de mesure et comprenant les étapes, pour chaque tension de mesure, de :

      - multiplier la tension de mesure par un sinus de référence et par un cosinus de référence pour obtenir deux signaux résultants (SRa1n, SRa2n) ;
      - réaliser une première intégration de chaque signal résultant sur une fenêtre glissante de largeur égale à la période d'excitation pour obtenir deux signaux intégrés (SIa1n, SIa2n) ;
      - réaliser une deuxième intégration de chaque signal intégré sur une fenêtre glissante de largeur égale à une demi-période d'excitation pour obtenir deux signaux doublement intégrés (SIIa1n, SIIa2n) ;
      - produire, à partir des signaux doublement intégrés, une amplitude de la tension de mesure ;

   - une première phase de traitement final comprenant l'étape de produire, à partir des amplitudes des deux tensions de mesure, une estimation d'une position du noyau magnétique.

2. Procédé de mesure selon la revendication 1, dans lequel, pour chaque tension de mesure Vx, l'amplitude de la tension de mesure est égale à $G \cdot \sqrt{(SIIx1n^2 + SIIx2n^2)}$ . où G est un gain et où SIIx1n et SIIx2n sont les signaux doublement intégrés de la tension de mesure Vx.

3. Procédé de mesure selon la revendication 2, dans lequel le gain G est défini pour corriger un gain d'une conversion analogique numérique, un gain de la première intégration, un gain de la deuxième intégration, et un gain trigonométrique égal à 1/2.

4. Procédé de mesure selon la revendication 1, comportant en outre une phase préliminaire comprenant l'étape de produire deux tensions croisées (VCa, VCb) dépendant chacune des deux tensions de mesure, une deuxième phase de traitement principal semblable à la première phase de traitement principal mais mise en œuvre sur les deux tensions croisées, et une deuxième phase de traitement final comprenant l'étape de produire une estimation d'une vitesse de variation de la position du noyau magnétique.

5. Procédé de mesure selon la revendication 4, dans lequel les deux tensions croisées sont telles que

   ```
   VCa(n)=(Va(n)+Vb(n)).Vmax+(Va(n)-Va(n-1/Fexc))*Fexc
   ```

   ```
   VCb(n)=(Va(n)+Vb(n)).Vmax+(Vb(n)-Vb(n-1/Fexc))*Fexc,
   ```

   où VCa(n), VCb(n), Va(n) et Vb(n) sont respectivement les n[ièmes] échantillons d'une première tension croisée, d'une deuxième tension croisée, d'une première tension de mesure et d'une deuxième tension de mesure, où Vmax est une valeur absolue maximale attendue de la vitesse de variation de la position du noyau magnétique, et où Fexc est une fréquence d'excitation de la tension d'excitation, et où (n-1/Fexc) représente l'indice d'un échantillon acquis 1 période d'excitation avant l'échantillon n.

6. Calculateur agencé pour être relié à un capteur de déplacement inductif qui comporte un transformateur et un noyau magnétique (2), le transformateur comprenant un enroulement primaire (3) et deux enroulements secondaires, le calculateur comprenant un composant de traitement et un convertisseur analogique numérique agencés pour mettre en œuvre le procédé de mesure selon l'une des revendications précédentes.

**7.** Système comprenant un calculateur selon la revendication 6 et un capteur de déplacement inductif qui comporte un transformateur et un noyau magnétique (2), le transformateur comprenant un enroulement primaire (3) et deux enroulements secondaires.

**Patentansprüche**

**1.** Messverfahren, das einen induktiven Verschiebungssensor (1) verwendet, der einen Transformator und einen Magnetkern (2) umfasst, wobei der Transformator eine Primärwicklung (3) und zwei Sekundärwicklungen (4, 5) umfasst, wobei das Messverfahren umfasst:

- eine Anregungsphase, die den Schritt des Anlegens einer Anregungswechselspannung (Ve) an die Klemmen der Primärwicklung umfasst;
- eine Erfassungsphase, die die Schritte umfasst, deren Ziel es ist, zwei Messspannungen (Va, Vb) an den Klemmen der beiden Sekundärwicklungen zu erfassen und zu digitalisieren;
- eine erste Hauptverarbeitungsphase, die an den beiden Messspannungen durchgeführt wird und für jede Messspannung die Schritte umfasst:

- Multiplizieren der Messspannung mit einem Referenzsinus und mit einem Referenzkosinus, um zwei resultierende Signale (SRa1n, SRa2n) zu erhalten;
- Durchführen einer ersten Integration jedes resultierenden Signals über ein gleitendes Fenster mit einer Breite, die gleich der Anregungsperiode ist, um zwei integrierte Signale (SIa1n, SIa2n) zu erhalten;
- Durchführen einer zweiten Integration jedes integrierten Signals über ein gleitendes Fenster mit einer Breite, die gleich einer halben Anregungsperiode ist, um zwei doppelt integrierte Signale (SIIa1n, SIIa2n) zu erhalten;
- Erzeugen einer Amplitude der Messspannung anhand der doppelt integrierten Signale;

- eine erste Endverarbeitungsphase, die den Schritt des Erzeugens einer Schätzung einer Position des Magnetkerns anhand der Amplituden der beiden Messspannungen umfasst.

**2.** Messverfahren nach Anspruch 1, bei dem für jede Messspannung Vx die Amplitude der Messspannung gleich $G.\sqrt{(SIIx1n^2 + SIIx2n^2)}$ ist, wobei G eine Verstärkung ist und wobei SIIx1n und SIIx2n die doppelt integrierten Signale der Messspannung Vx sind.

**3.** Messverfahren nach Anspruch 2, bei dem die Verstärkung G definiert ist, um eine Verstärkung einer Analog-Digital-Wandlung, eine Verstärkung der ersten Integration, eine Verstärkung der zweiten Integration und eine trigonometrische Verstärkung gleich 1/2 zu korrigieren.

**4.** Messverfahren nach Anspruch 1, ferner umfassend eine vorbereitende Phase, die den Schritt des Erzeugens zweier gekreuzter Spannungen (VCa, VCb) umfasst, die jeweils von den beiden Messspannungen abhängen, eine zweite Hauptverarbeitungsphase, die ähnlich der ersten Hauptverarbeitungsphase ist, jedoch an den beiden gekreuzten Spannungen durchgeführt wird, und eine zweite Endverarbeitungsphase, die den Schritt des Erzeugens einer Schätzung einer Änderungsgeschwindigkeit der Position des Magnetkerns umfasst.

**5.** Messverfahren nach Anspruch 4, bei dem die beiden gekreuzten Spannungen derart sind, dass

$$VCa(n) = (Va(n) +Vb(n)).Vmax+ (Va(n)-Va(n-1/Fexc))*Fexc$$

$$VCb(n) = (Va(n) +Vb(n)).Vmax+(Vb(n)-Vb(n-1/Fexc))*Fexc,$$

wobei VCa(n), VCb(n), Va(n) und Vb(n) die n-ten Proben einer ersten gekreuzten Spannung, einer zweiten gekreuzten Spannung, einer ersten Messspannung bzw. einer zweiten Messspannung sind, wobei Vmax ein maximaler erwarteter Absolutwert der Änderungsgeschwindigkeit der Position des Magnetkerns ist, und wobei Fexc eine Anregungsfrequenz der Anregungsspannung ist, und wobei (n-1/Fexc) den Index einer Probe darstellt, die 1 Anregungsperiode vor der Probe n erfasst wird.

**6.** Rechner, der ausgebildet ist, um mit einem induktiven Verschiebungssensor verbunden zu werden, der einen Transformator und einen Magnetkern (2) umfasst, wobei der Transformator eine Primärwicklung (3) und zwei Sekundärwicklungen umfasst, wobei der Rechner eine Verarbeitungskomponente und einen Analog-Digital-Wandler umfasst, die ausgebildet sind, um das Messverfahren nach einem der vorhergehenden Ansprüche durchzuführen.

**7.** System, umfassend einen Rechner nach Anspruch 6 und einen induktiven Verschiebungssensor, der einen Transformator und einen Magnetkern (2) umfasst, wobei der Transformator eine Primärwicklung (3) und zwei Sekundärwicklungen umfasst.

**Claims**

**1.** A measurement method using an inductive displacement sensor (1) that includes a transformer and a magnetic core (2), the transformer comprising a primary winding (3) and two secondary windings (4, 5), the measurement method including:

- an excitation phase comprising the step of applying an AC excitation voltage (Ve) across the terminals of the primary winding;
- an acquisition phase comprising the steps that have the aim of acquiring and digitizing two measurement voltages (Va, Vb) across the terminals of the two secondary windings;
- a first main processing phase, which is performed on the two measurement voltages and which, for each measurement voltage, comprises the steps of:

  - multiplying the measurement voltage by a reference sine wave and by a reference cosine wave in order to obtain two resulting signals (SRa1n, SRa2n);
  - carrying out a first integration of each resulting signal over a sliding window that has a width equal to the excitation period in order to obtain two integrated signals (SIa1n, SIa2n);
  - carrying out a second integration of each integrated signal over a sliding window that has a width equal to half an excitation period in order to obtain two doubly integrated signals (SIIa1n, SIIa2n);
  - producing an amplitude of the measurement voltage from the doubly integrated signals;

- a first final processing phase, which comprises the step of producing an estimate of a position of the magnetic core from the amplitudes of the two measurement voltages.

**2.** The measurement method as claimed in claim 1, wherein, for each measurement voltage Vx, the amplitude of the measurement voltage is equal to $G \cdot \sqrt{(SIIx1n^2 + SIIx2n^2)}$ . where G is a gain and where SIIx1n and SIIx2n are the doubly integrated signals of the measurement voltage Vx.

**3.** The measurement method as claimed in claim 2, wherein the gain G is defined so as to correct a gain of an analog-to-digital conversion, a gain of the first integration, a gain of the second integration and a trigonometric gain equal to 1/2.

**4.** The measurement method as claimed in claim 1, furthermore including a preliminary phase, which comprises the step of producing two crossed voltages (VCa, VCb), each of which is dependent on the two measurement voltages, a second main processing phase, which is similar to the first main processing phase but is performed on the two crossed voltages, and a second final processing phase, which comprises the step of producing an estimate of a rate of change of the position of the magnetic core.

**5.** The measurement method as claimed in claim 4, wherein the two crossed voltages are such that

$$VCa(n) = (Va(n) + Vb(n)).Vmax + (Va(n) - Va(n - 1/Fexc)) * Fexc$$

$$VCb(n) = (Va(n) + Vb(n)).Vmax + (Vb(n) - Vb(n - 1/Fexc)) * Fexc,$$

where VCa(n), VCb(n), Va(n) and Vb(n) are the $n^{th}$ samples of a first crossed voltage, of a second crossed voltage, of a first measurement voltage and of a second measurement voltage, respectively, where Vmax is a maximum expected absolute value of the rate of change of the position of the magnetic core, and where Fexc is an excitation frequency of the excitation voltage, and where (n-1/Fexc) represents the index of a sample acquired 1 excitation period before the sample n.

6. A computer arranged to be connected to an inductive displacement sensor comprising a transformer and a magnetic core (2), the transformer comprising a primary winding (3) and two secondary windings (4, 5), the computer comprising a processing component and an analog-to-digital converter, which are designed to perform the measurement method as claimed in one of the preceding claims.

7. A system comprising a computer as claimed in claim 6 and an inductive displacement sensor comprising a transformer and a magnetic core (2), the transformer comprising a primary winding (3) and two secondary windings (4, 5).

Fig. 1

**Fig. 2**

EP 3 645 978 B1

Fig. 3

**Fig. 4**

TriggVa

Va

30

TriggVb

Vb

SIN_REF

COS_REF

31

32

33

OR

34

amp (Va)

R

amp (Va+Vb)

amp (Vb)

EP 3 645 978 B1

18

EP 3 645 978 B1

TriggVa

VY

VX

40

NPT

Fech

VCa

**Fig. 5**

Fig. 6

amp (Va+Vb)

NPT

49

47

TriggVa

VCa

VX   VY

40

Va

Vb

SIN_REF

COS_REF

42

44  u²   u²  44

45  +   +

46  √u

43

44  u²   u²  44

45  +   +

46  √u

TriggVb

VCb

VX   VY

41

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 291720 A1

- US 2016197620 A1